# EUROPEAN PATENT APPLICATION

(11) **EP 1 964 913 A1**
(43) Date of publication of application: **03.09.2008**
(21) Application number: 07003690.0
(22) Date of filing: 22.02.2007
(51) Int. Cl.: C12G 1/02, C12G 3/02, C12C 11/00

(54) **Nutrient supplement composition and its use in the production of wine**

(71) Applicant: Heinemeyer, Carsten, Dipl. Ing. Oen. (FH), 79206 Breisach a. Rhein (DE)
(72) Inventor: Heinemeyer, Carsten, Dipl. Ing. Oen. (FH), 79206 Breisach a. Rhein (DE)
(74) Representative: Krauss, Jan

(57) **Abstract**

The present invention refers to a nutrient supplement composition and its use in the production of wine. The nutrient supplement composition comprises methionine and biotin for use in the alcoholic fermentation of an organic substrate, in particular for use in the alcoholic fermentation of grape juice mediated by *Saccharomyces cerevisiae.* The invention further refers to a use of methionine and biotin as nutrient supplements, to a method for supplementation of nutrients, and to a procedure of fermentation.

## Description

The present invention refers to a nutrient supplement composition comprising methionine and biotin for use in the fermentation of an organic substrate, in particular for use in the alcoholic fermentation of grape juice mediated by *Saccharomyces cerevisiae.* The invention further refers to a use of methionine and biotin as nutrient supplements, to a method for supplementation of nutrients, and to a procedure of fermentation.

### Background of the invention

Stuck or sluggish fermentation are still present problems in wine industry. Another issue is the formation of reduced off-flavours. Both problems arise when the metabolism of yeast, catalyzing the conversion of sugar into ethanol, i.e. the alcoholic fermentation, is inhibited. The reasons for such an inhibition may be, for example, temperature, residual turbidity, and pH, but also pesticides and biogenous inhibitors derived from undesired yeast or bacteria. In addition, direct competitive inhibition by foreign organisms has to be considered.

However, the most common reason for such an inhibition is a lack of nutrition. As a result, the fermentation process remains incomplete and, accordingly, the fermentation products contain an excess of residual sugar. In addition, several sensory deficiencies resulting from undesired side-products occur. Since the marketing of such wines is limited or even impossible, the world wide commercial damage due to insufficient fermentation of wine amounts to million Euro.

In order to avoid insufficient fermentation, there are several nutrient supplements in the market. One of the basic requirements for sugar consumption and conversion into ethanol is the presence of sufficient nitrogen that can be utilized by the fermenting yeast. Therefore, the addition of diammonium phosphate (DAP) or yeast extract to grape juice or mash is a commonly used method to support a more complete fermentation and to reduce off-flavours. In this respect, DAP is added as a pure salt or in combination with thiamine (vitamin B1). Yeast extracts are commonly used in the form of combinations of yeast cell wall preparations, yeast extracts, DAP and/or thiamine. Apart from thiamine, the components of these nutrient supplements are not naturally present in grapes. They are synthetically prepared or are by-products in yeast production.

In many cases, however, the addition of DAP or yeast extracts turns out as insufficient to ensure a reliable and "clean" fermentation. Delayed or insufficient fermentation is often observed even if enough nitrogen is present due to a deficiency in other important fermentation co-factors such as vitamins, trace elements, and specific amino acids. These co-factors are required by the yeast to utilize nitrogen sources and to conduct a secure and clean fermentation. However, the presence of such co-factors depend on, for example, the method of production, but also on hardly controllable and susceptible factors such as environmental conditions during cultivation and maturation of the grapes.

Therefore there is a need in the art for supplementation of the nutrients required in the alcoholic fermentation of grape juice in order to ensure a complete fermentation and to avoid off-flavours.

Thus, it is an object of the present invention to provide means and methods for improving and ensuring the quality of wine.

### Summary of the invention

The object of the present invention is solved by a nutrient supplement composition comprising methionine and biotin for use in the alcoholic fermentation of an organic substrate.

In one embodiment, the ratio of the biotin and methionine within the composition is the range of 1:100 to 1:200, preferably is in the range of 1:125 to 1:160, and most preferably is 1:142.

In one embodiment, the content of the methionine within the composition is in the range of 42.5 to 425 g/kg, preferably is in the range of 63 to 213 g/kg, and most preferably is 85 g/kg.

In one embodiment, the content of biotin is in the range of 0.3 to 3 g/kg, preferably is in the range of 0.45 to 1.5 g/kg, and most preferably is 0.6 g/kg.

In one embodiment, the composition additionally comprises arginine and glutamine.

In one embodiment, the composition additionally comprises pantothenic acid, pyridoxal, and thiamine.

In one embodiment, the composition additionally comprises a magnesium salt and/or zinc salt, preferably magnesium sulphate and/or zinc sulphate, most preferably magnesium sulphate and zinc sulphate.

The object of the present invention is further solved by a use of methionine and biotin as nutrient supplements in the alcoholic fermentation of an organic substrate.

In one embodiment of the use, the methionine and biotin are used together as components of a fermentation supplement composition.

In one embodiment of the use, the fermentation is mediated by a microorganism belonging to the genus of *Saccharomyces,* and preferably by *Saccharomyces cerevisiae.*

In one embodiment of the use, the organic substrate is a fruit juice, a fruit mash or a sugar syrup, preferably is a juice of grapes or apples, most preferably is a grape juice.

In one embodiment of the use, the ratio of the biotin and methionine is in the range of 1:100 to 1:200, preferably is in the range of 1:125 to 1:160, and most preferably is 1:142.

In one embodiment of the use, the final concentration of the methionine within the substrate is in the range of 1.5 to 15 g/100 l, preferably is in the range of 2.2 to 7.5 g/100 l, and most preferably is in the range of 2.55 to 3.4 g/100 l.

In one embodiment of the use, the final concentration of the biotin within the substrate is in the range of 0.01 to 0.1 g/100 l, more preferably is in the range of 0.015 to 0.05 g/100 l, and most preferably is in the range of 0.018 to 0.024 g/100 l.

The object of the present invention is further solved by a method for supplementation of nutrients in the fermentation comprising the step of adding methionine and biotin to an organic substrate.

In on embodiment of the method, the methionine and biotin are added together as components of a fermentation supplement composition.

In one embodiment of the method, the organic substrate is a fruit juice, a fruit mash or a sugar syrup, preferably is a juice of grapes or apples, and most preferably is a grape juice.

In one embodiment of the method, the biotin and methionine are added such that their ratio within the substrate is in the range of 1:100 to 1:200, preferably is in the range of 1:125 to 1:160, and most preferably is 1:142.

In one embodiment of the method, the methionine is added such that its final concentration within the substrate is in the range of 1.5 to 15 g/100 l, preferably is in the range of 2.2 to 7.5 g/100 l, and most preferably is in the range of 2.55 to 3.4 g/100 l.

In one embodiment of the method, the biotin is added such that its final concentration within the substrate is in the range of 0.01 to 0.1 g/100 l, more preferably is in the range of 0.015 to 0.05 g/100 l, and most preferably is in the range of 0.018 to 0.024 g/100 l.

The object of the present invention is further solved by a procedure of fermentation comprising the method for supplementation of nutrients according to the present invention.

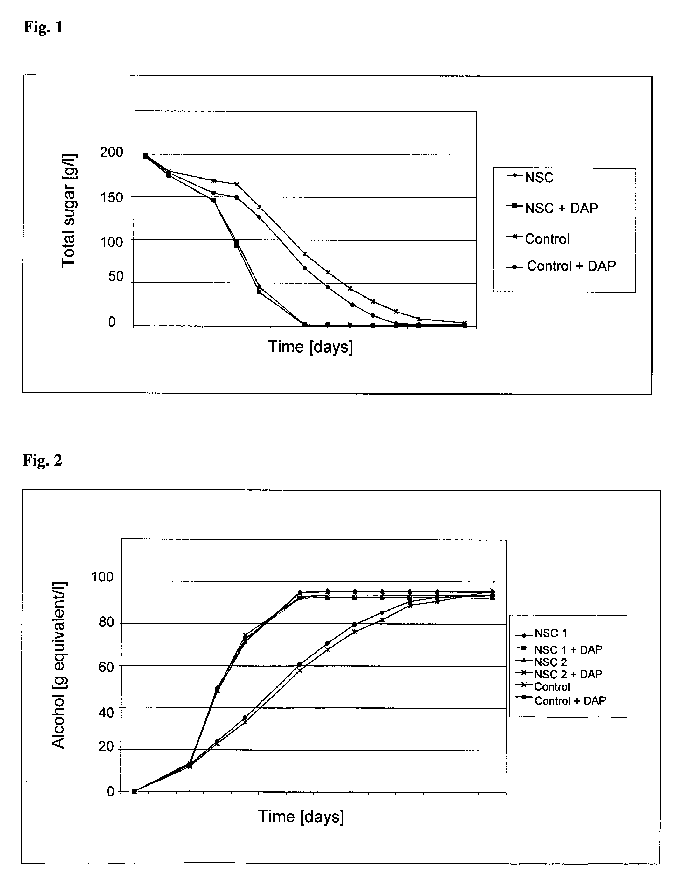

The present invention is based on the finding that the metabolism of yeast such as *Saccharomyces cerevisiae* during alcoholic fermentation can be optimized by supplementing both methionine and biotin. Methionine plays a central role in the sulphur metabolism of yeast and is of particular importance amongst the amino acids to be selected in connection with the present invention. However, as surprisingly discovered, the optimal effect of stimulating the amino acid metabolism and avoiding undesired sulphur components is achieved only by a combination of methionine and biotin, as described in Example 3 and shown in Figure 2.

All sorts of yeast species can be used, especially the yeast species selected from the group of *Saccharomyces, Ascomyces, Candida,* or *Brettanomyces. Non-Saccharomyces* yeast species and genetically modified yeast species can also be used.

The present invention provides a nutrient supplement composition, i.e. a yeast fermentation supplement, comprising methionine and biotin. Using this composition, nutrients and co-factors required by the fermenting yeast are supplemented and deficiencies are balanced. As a result, the ability of yeast to utilize nitrogen sources is enhanced and thus, the alcoholic fermentation is allowed to proceed faster and more completely. All functions that are essential for a proper metabolism of the yeast are improved with the consequence that the formation of undesired by-products, e.g. sulphur compounds, or reduced off-flavours is inhibited, the formation of acetic acid and SO₂ is minimized, and the formation of fruity esters is increased without a yeasty or nutty impact. Thus, the nutrient supplement composition of the present invention enables the production of "clean" wines with improved aromatic properties and quality. The requirement of secondary treatments, e.g. by addition of potentially harmful fining agents such as copper sulphate, is reduced and the consumer's digestibility is enhanced.

Apart from juices commonly used in wine production, i.e. grape juice and other fruit juices, the composition can be used in all kind of sugar containing juices, juice concentrates, syrups or mashes. The nutrient supplement composition preferably is a dried matter, and most preferably is in the form of a powder, granulate material, pellets or tablets. Particularly preferred is a crystalline powder. Alternatively, the composition may be in the form of a liquid, a suspension or a semi-solid material. However, further additives, e.g. stabilizers, preservatives, colouring agents etc. are also considered, if necessary.

Application is recommended for all kind of fermentable substrates that contain hexoses and pentose. Juices used for the nutrient supplement composition can be all kind of fruit juices, grape juice, beer wort, sugar beet syrup, sugar cane syrup, or others.

### Detailed description of the invention

- Figure 1: shows a time course of sugar consumption in must during the alcoholic fermentation process.
- Figure 2: shows a time course of alcohol production in must during the fermentation process.
- Figure 3: shows a time course of SO₂ formation in must during the fermentation process.
- Figure 4: shows a time course of the formation of volatile acids in must during the fermentation process.
- Figure 5: shows the amino acid concentration in must prior to and after the fermentation process. 1 = juice; 2 = control; 3 = 100 g/100 l DAP; 4 = nutrient supplement composition of the present invention (NSC).
- Figure 6: shows the concentration of methionine in must prior to and after the fermentation process. 2 = control, 3.2 mg/l; 3 = 100 g/100 l DAP, 3.9 mg/l; 4 = NSC, 1.4 mg/l.
- Figure 7: shows the concentration of cysteine in must prior to and after the fermentation process. 2 = control, 30.7; 3 = 100 g/100 l DAP, 28.6; 4 = NSC, 13.0 mg/l.
- Figure 8: shows the concentration of arginine in must prior to and after the fermentation process. 1 = juice, 479.4 mg/l; 2 = control, 33.8 mg/l; 3 = 100 g/100 l DAP, 108.0 mg/l; 4 = NSC, 27.3 mg/l.
- Figure 9: shows the concentration of glutamine in must prior to and after the fermentation process. 1 = juice, 74.4 mg/l; 2 = control, 19.6 mg/l; 3 = 100 g/100 l DAP, 15.0 mg/l; NSC, 8.8 mg/l.
- Figure 10: shows the concentration of alanine in must prior to and after the fermentation process. 1 = juice, 140.9 mg/l; 2 = control, 59.0 mg/l; 3 = 100 g/100 l DAP, 166.0 mg/l; NSC, 17.8 mg/l.

### EXAMPLES

### Example 1: Nutrient supplement composition and its use

### (a) Composition

A nutrient supplement composition according to the present invention is shown in Table 1. This composition represents a blend of pure vitamins, amino acids, and sulphate salts, which components are all naturally present in grapes or fresh musts. Thus, the composition may be regarded as a natural fermentation supplement. Moreover, the organic components of the composition, i.e. vitamins and amino acids, are produced biologically by fermentation. The manufacturing processes of the nutrient supplement composition do not involve any genetically modified organism or material derived from such an organism.

**Table 1: Nutrient supplement composition**

| Supplement | Amount [g]* | Concentration [g/100 l]** | Concentration [g/100 l]*** |
|---|---|---|---|
| Biotin (vitamin H) | 0,6 | 0,019 | 0,024 |
| Panthoic acid (vitamin B5) | 11 | 0,352 | 0,44 |
| Pyridoxal (vitamin B6) | 8,2 | 0,262 | 0,328 |
| Thiamine (vitamin B1) | 3,2 | 0,102 | 0,128 |
| MgSO₂ | 64 | 2,05 | 2,56 |
| ZnSO₂ | 8 | 0,256 | 0,32 |
| Arginine | 600 | 19,2 | 24 |
| Glutamine | 220 | 7,04 | 8,8 |
| Methionine | 85 | 2,72 | 3,4 |
| Total | 1000 | 32 | 40 |

| | | | |
|---|---|---|---|
| * as a dry crystalline powder; ** after the addition of 32 g nutrient supplement composition to 100 1 of water; *** after the addition of 40 g nutrient supplement composition to 100 1 of water. | | | |

The nutrient supplement composition is a white crystalline powder and is delivered in vacuum packed aluminium pouches. If stored under dry conditions at 15°C, the shelf life is several months up to more than a year. Care should be taken with storage above 30°C and prolonged contact with atmospheric humidity.

### (b) Preparation and use

In order to use the nutrient supplement composition of the present invention, dissolve the crystalline powder in water or directly in juice. The temperature should not exceed 35°C. Stir until a homogenous solution without any visible solid matter is obtained.

Add the prepared suspension, after addition of the yeast to the fermentation process, to juice or mash to be fermented before starting the fermentation process. Nevertheless, the process can also be executed in a different order. Another application is also possible such as the addition of the yeast in a stirring spontaneous fermentation process or addition before inoculation by pure fermentation yeast. Use the recommended dosages of the nutrient supplement composition (see Table 2).

**Table 2: Recommended dosages of the nutrient supplement composition**

| Application | Dosage |
|---|---|
| Juice or Mash < 22° Brix | 32 g/100 l |
| Juice or Mash > 23° Brix | 40 g/100 l |

Degrees Brix (symbol °Bx) is a measurement of the mass ratio of dissolved sucrose to water in a liquid. It is measured with a saccharimeter that measures specific gravity of a liquid or more easily with a refractometer. A 25° Brix solution has 25 g of sucrose sugar per 100 g of liquid. Or, to put it another way, there are 25 g of sucrose sugar and 75 g of water in the 100 g of solution. Brix is used in the food industry for measuring the approximate amount of sugars in fruit juices, wine, soft drinks, and in the sugar manufacturing industry.

At sugar levels up to 22° Brix, a dosage rate of 32g/100 l provides satisfying results regarding the effects on the metabolism of the yeast during fermentation. The studies showed also that the requirements of the supplement were increased when the high levels were above 23° Brix.

The studies demonstrated that 23° Brix is a turning point, where the yeast had an exponential increase of supplement to ensure the metabolic functions, as it was obvious at lower dosages at 22° Brix.

To give the best results in wines from dry vineyards or parcels that are known to give wines with reduced off-flavours, it is recommended to split the amount of nutrient supplement composition added in two portions. For that purpose, add a volume of the suspension prepared from nutrient supplement composition as described above so as to obtain a final concentration of 20 g/100 l at the start of the fermentation. Later, in the second half of the total fermentation time, add a further volume of the suspension so as to obtain again a final concentration of 20 g/100 l.

### Example 2: Fermentation kinetics

Figure 1 and Figure 2 show fermentation kinetics in terms of sugar consumption (Figure 1) and alcohol, i.e. ethanol, production (Figure 2). The respective results were obtained from fermentation under different conditions which was carried out on a scale as commonly used in commercial wine production, for example in a 3000 1 stainless steel tank.

### (a) Trial parameter

Must was produced as commonly known in the art. This included the following procedures: Reception of hand picked grapes in 500 1 bins. Desteming of the grapes with AMOS destemer. Press over a pneumatic press BUCHER RPF 30. Clarification by sedimentation.

Fermentation of the juice in 300 l und 3000 l stainless steel tanks fermentation. Temperature controlled fermentation at 18°C. Application of pure fermentation yeast strain EC 1118. After completion of the alcoholic fermentation first sampling. In the following, racking and filtration with Cross Flow filter type SartoFlow from Sartorius. Stabilization with 80 ppm SO₂.

### (b) Analytical parameter before fermentation

| Analytical parameter | Analytical method and equipment | Place of analysis |
|---|---|---|
| - Sugar, alcohol | FOSS FTIR, GrapeScan und WineScan by interferometric infrared spectroscopy | Badischer Winzerkeller |
| - Temperature, pH | Calibrated pH and thermometer HANNA phep98128 | |
| - Carbon acids, malic acid, L and D lactic acid | Enzymatic determination with enzyme kit by Boehringer and measurement over Perkin Elmer spectrometer | |
| - Ferm N value, YAN Yeast assimilable nitrogen | Foss FTIR GrapeScan | Badischer Winzerkeller |
| - Amino acid profile | AMINOSYS | FA Geisenheim |
| - Methionine | Amino acid analyser; HPLC with columns for methionine and cysteine | |
| - Cysteine | | |

### (b) Analytical parameter after fermentation

| Analytical parameter | Analytical method and equipment | Place of analysis |
|---|---|---|
| - Sugar | FOSS FTIR, GrapeScan und WineScan by interferometric infrared spectroscopy | Badischer Winzerkeller |
| - pH, temperature | Calibrated pH and thermometer HANNA phep98128 | |
| - Carbon acids | Enzymatic determination with enzyme kit by Boehringer and measurement over Perkin Elmer spectrometer | |
| - Amino acid profile | AMINOSYS | FA Geisenheim |
| - Methionine, Cysteine | Amino acid analyser; HPLC with columns for methionine and cysteine | |
| - Free SO₂ | Titration according "Rebelein" | |
| - Total SO₂ | Titration according "Rebelein | |
| - Volatile acidity | Official distillation method according OIV | |
| - Sensory | Triangle test and descriptive method | Badischer Winzerkeller (WBI Freiburg) |

As shown in Figure 1, an addition of the nutrient supplement composition of the present invention ("NSC") resulted in a more rapid fermentation compared to the control, i.e. in the absence of NSC (or DAP). Further addition of 100 g/100 l DAP ("NSC + DAP") did not lead to an additional increase in the fermentation rate. In general, a concentration of 32g/100 l of the nutrient supplement composition was applied.

Moreover, as also shown in Figure 1, an addition of 100 g/100 l DAP alone ("Control + DAP") did not accelerate the fermentation compared to the control ("Control"). The conclusion drawn from this result is that supplementation of nitrogen is not always capable of overcoming a retardation of fermentation or, vice versa, a deficiency of nitrogen must not be the only reason of retarded fermentation. Interestingly, fermentation in the presence of NSC ran quite similar irrespective of whether DAP was additionally present or not.

The results shown in Figure 2, relating to the alcohol production, confirm the results obtained for the sugar consumption as shown in Figure 1.

### Example 3: Formation of SO₂ and volatile acids

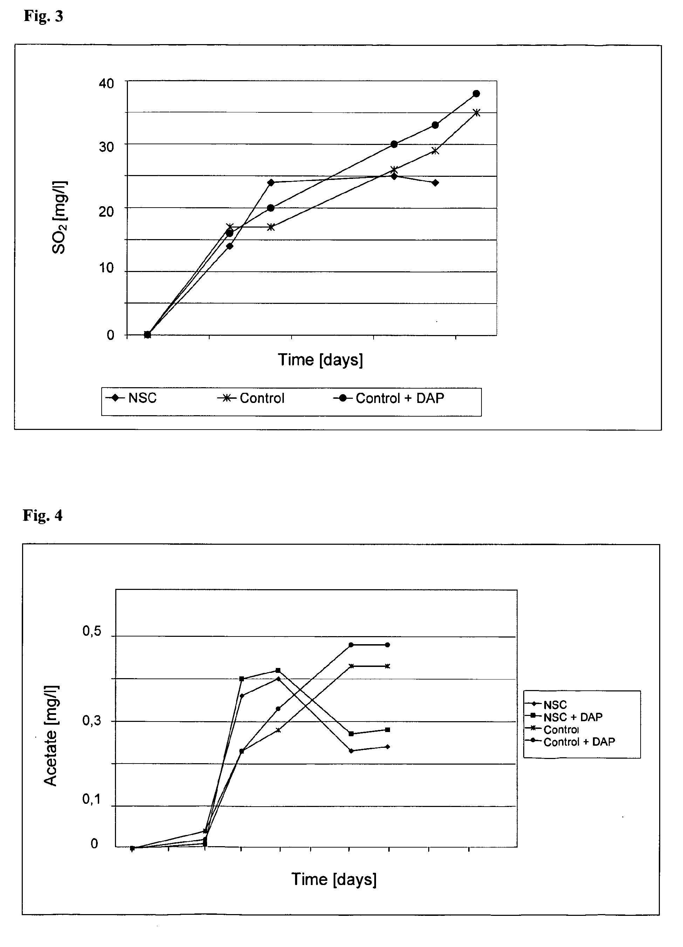

As shown in Figure 3, the formation of SO₂ levelled off after three days in the presence of NSC, whereas under control conditions and in the presence of DAP, the formation of SO₂ further proceeded. As a consequence, at later points in time, the concentration of SO₂ in must is lowered when NSC was present.

As shown in Figure 4, volatile acids rapidly increased at the beginning of fermentation in the presence of NSC but decreased after the fourth day. No difference was observed in case that DAP was additionally present. In contrast, under control condition, i.e. without NSC or DAP, and in the presence of DAP only, the formation of volatile acids further increased and finally reached a plateau, however, a reduction of volatile acids once produced was not observed.

### Example 4: Amino acid consumption

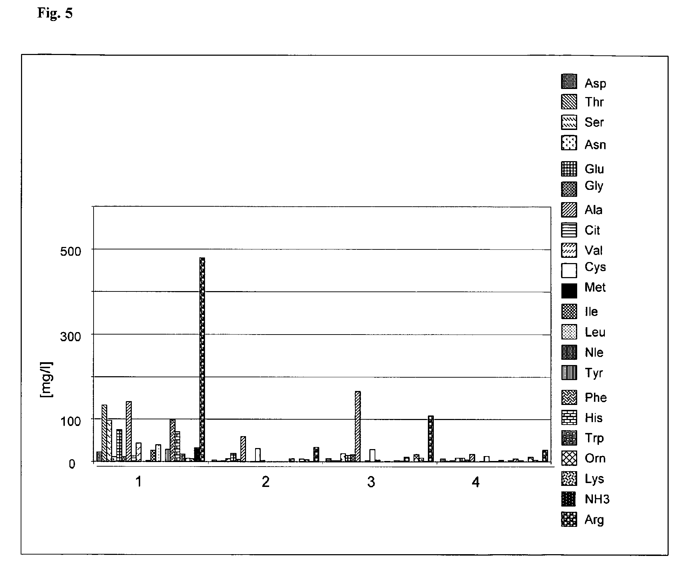

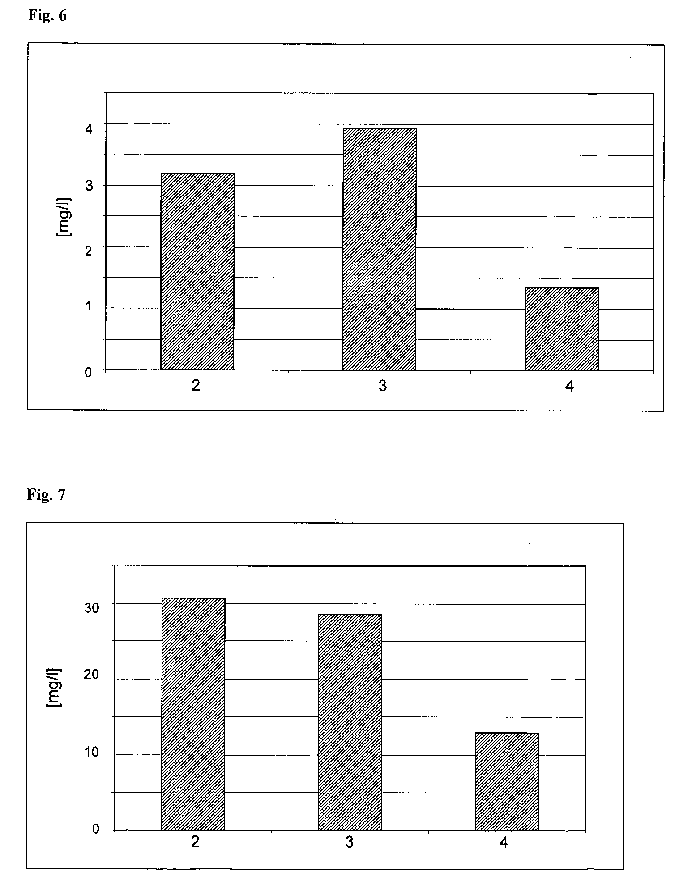

Figure 5 shows the concentration of selected amino acids in must prior to (juice) and after fermentation under different conditions. As can be seen, amino acids were most efficiently degraded, i.e. metabolized, in the presence of NSC. The situation with each of methionine, cysteine, arginine, glutamine, and alanine is shown in more detail in Figures 6 to 10.

As shown in Figure 6, the concentration of methionine is significantly reduced after fermentation in the presence of NSC compared to the control, and in particular compared to fermentation in the presence of DAP.

Similarly, as shown in Figure 7, the concentration of cysteine is significantly reduced after fermentation in the presence of NSC compared to the control and compared to fermentation in the presence of DAP.

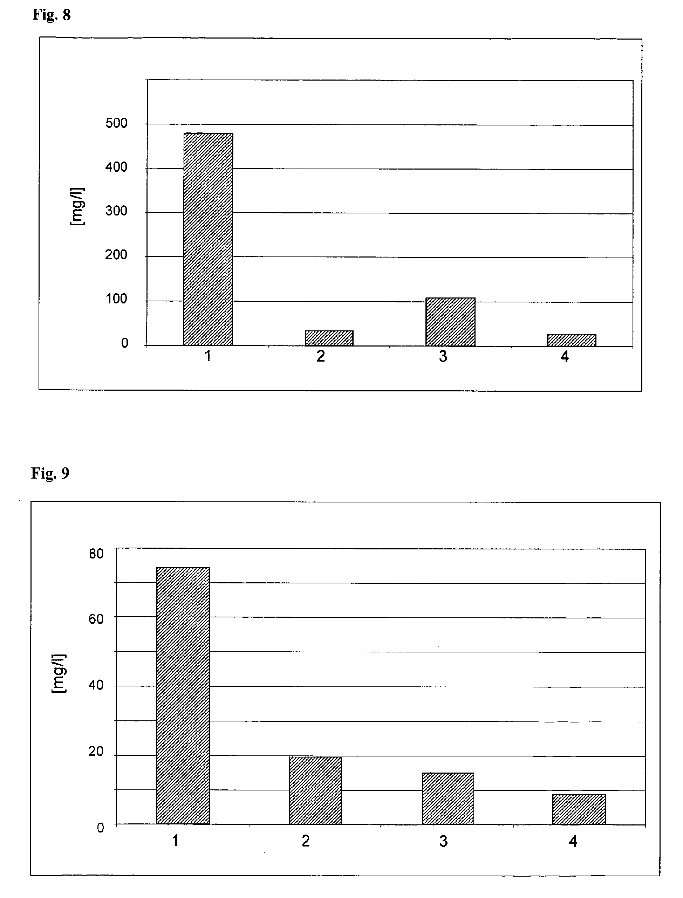

As shown in Figure 8, arginine was remarkably metabolized during fermentation both in the presence of NSC and in the control. Interestingly, an addition of DAP even inhibited arginine metabolization.

Figure 9 shows a remarkable metabolization of glutamine during fermentation which is particularly pronounced in the presence of NSC.

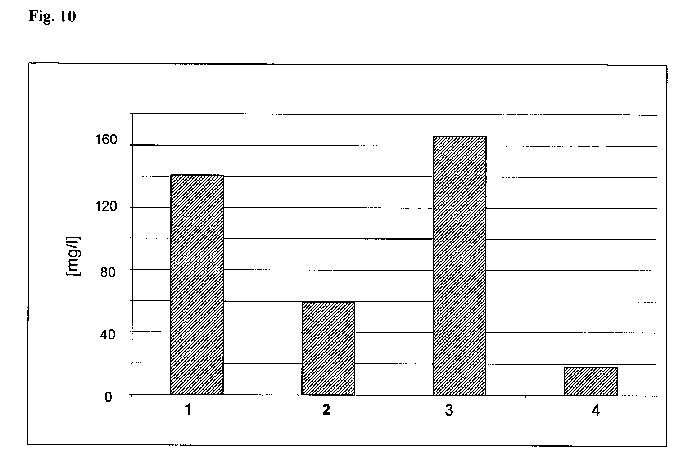

Quite interesting results are obtained with alanine as shown in Figure 10. While alanine is metabolized in the control and, in particular, in the presence of NSC, DAP not only inhibited alanine metabolization, but also induced an increase in alanine concentration.

## Claims

1. A nutrient supplement composition comprising methionine and biotin for use in the alcoholic fermentation of an organic substrate.

2. The composition according to claim 1, wherein the ratio of biotin and methionine within the composition is in the range of 1:100 to 1:200, preferably is in the range of 1:125 to 1:160, and most preferably is 1:142.

3. The composition according to claim 1, wherein the content of methionine is in the range of 42.5 to 425 g/kg, preferably is in the range of 63 to 213 g/kg, and most preferably is 85 g/kg.

4. The composition according to claim 1 or 3, wherein the content of biotin is in the range of 0.3 to 3 g/kg, preferably is in the range of 0.45 to 1.5 g/kg, and most preferably is 0.6 g/kg.

5. The composition according to any of the preceding claims, additionally comprising arginine and/or glutamine.

6. The composition according to any of the preceding claims, additionally comprising pantothenic acid, pyridoxal and/or thiamine.

7. The composition according to any of the preceding claims, wherein each of methionine, biotin, arginine, glutamine, pantothenic acid, pyridoxal and thiamine are biologically produced, preferably by fermentation.

8. The composition according to any of the preceding claims, additionally comprising magnesium salt and/or zinc salt.

9. A use of methionine and biotin as nutrient supplements in the alcoholic fermentation of an organic substrate.

10. The use according to claim 9, wherein methionine and biotin are used together as components of a fermentation supplement composition.

11. The use according to claim 9 and 10, wherein the fermentation is mediated by microorganisms belonging to the genus of *Saccharomyces,* preferably by *Saccharomyces cerevisiae.*

12. The use according to any of claims 9 to 11, wherein the organic substrate is a fruit juice, a fruit mash or a sugar syrup, preferably is a juice of grapes or apples, most preferably is a grape juice.

13. The use according to any of claims 9 to 12, wherein the ratio of biotin and methionine is in the range of 1:100 to 1:200, preferably is in the range of 1:125 to 1:160, and most preferably is 1:142.

14. The use according to any of claims 9 to 12, wherein the final concentration of methionine within the substrate is in the range of 1.5 to 15 g/100 l, preferably is in the range of 2.2 to 7.5 g/100 l, and most preferably is in the range of 2.55 to 3.4 g/1001.

15. The use according to any of claims 9 to 12 and 14, wherein the final concentration of biotin within the substrate is in the range of 0.01 to 0.1 g/100 l, more preferably is in the range of 0.015 to 0.05 g/100 l, and most preferably is in the range of 0.018 to 0.024 g/100 l.

16. A method for supplementation of nutrients in the fermentation comprising the step of adding methionine and biotin to an organic substrate.

17. The method according to claim 16, wherein methionine and biotin are added together as components of a fermentation supplement composition.

18. The method according to claim 16 or 17, wherein the organic substrate is a fruit juice, a fruit mash or a sugar syrup, preferably is a juice of grapes or apples, most preferably is a grape juice.

19. The method according to any of claims 16 to 18, wherein biotin and methionine are added such that their ratio within the substrate is in the range of 1:100 to 1:200, preferably is in the range of 1:125 to 1:160, and most preferably is 1:142.

20. The method according to any of claims 16 to 18, wherein methionine is added such that its final concentration within the substrate is in the range of 1.5 to 15 g/1001, preferably is in the range of 2.2 to 7.5 g/1001, and most preferably is in the range of 2.55 to 3.4 g/1001.

21. The method according to any of claims 16 to 18 and 20, wherein biotin is added such that its final concentration within the substrate is in the range of 0.01 to 0.1 g/100 l, more preferably is in the range of 0.015 to 0.05 g/100 l, most preferably is in the range of 0.018 to 0.024 g/100 l.

22. A procedure of fermentation comprising the method according to any of claims 16 to 21.
